# EUROPEAN PATENT APPLICATION

(11) **EP 3 190 399 A1**
(43) Date of publication of application: **12.07.2017**
(21) Application number: 13461559.0
(22) Date of filing: 08.11.2013
(51) Int. Cl.: G01M 99/00

(54) **Position for testing linear actuators whose working units move in linear or rotating motion.**

(71) Applicant: Instytut Technologii Eksploatacji, 26-600 Radom (PL)
(72) Inventor: Samborski, Tomasz, 26-600 Radom (PL); Zbrowski, Andrzej, 26-600 Radom (PL); Kozio , Stanis aw, 26-600 Radom (PL)
(74) Representative: Rumpel, Alicja

(57) **Abstract**

The position for testing servomotors whose working bodies execute linear or rotary movement contains a climatic chamber /1/with adjusted temperature and humidity, in which in one end the tested servomotor/22/with rotary movement is placed and connected by a shaft /13/ and clutch /14/with an electrical engine /15/, equipped with a brake, and on the shaft /13/a moment meter /17/and permanently fastened roller are placed /12/. On the other hand, the tested servomotor /21/of linear movement is placed in the second end of the climatic chamber /1/, equipped in a culvert /25/and is connected by an articulation /24/with carts /3, 4/, placed on the guide /2/, between which a force converter is placed /8/and the cart /3/is connected with the movement converter /9/. On the one side, the cart /4/is connected by an articulation /20 /with the cart /5/, which is connected by a screw transmission /6/with an electrical engine /7/and, on the other side, the cart /4/is connected with a rotary roller /10/, which is connected by means of a band carried on it and changing direction/19/which on one side is carried out by rotary rollers /11/ and connected with a weight /18/, and on the other it is conducted on a rotary roller /23/and connected with a roller /12/fastened on the shaft /13/.

## Description

The object of the invention is a position for testing servomotors whose working bodies execute linear or rotary movement and determining their operating characteristics, especially used in systems of ventilation, smoke removal and aeration, to drive of flaps and windows.

There are known solutions of positions permitting testing servomotors executing only one type of movement, linear or rotary, conducted in permanent climate conditions, most often corresponding to the conditions of environment dominant in laboratory rooms.

Well-known for the patent description PL 171525 axial forces measurement sensor in the servomotor has a measurement element with spring deformed walls equipped with converters of mechanical signal into electric. The measuring element is made in the body of the head, between the threaded part, screwed onto the threaded end of servomotor rod and articulation.

In the well-known thanks to the patent description PL 173796 hydraulic system of the position for servomotors tests, the source of high pressure is piston overdrive unit, supplied with a low-pressure pump, through a valve reducing pressure to the set value. On branched feeding and outgoing wires, the system has developed two parallel distributors, and in front of the supplying distributor the system has a cut-off valve, and behind the supplying distributor of branches of overdrive unit power supply, the system has developed a safety valve, and high-pressure channel of the overdrive unit is connected directly with below-piston chamber of the tested servomotor and indirectly, by cut-off valve and distributor with the power supply system and apart from this over-piston chamber of the tested servomotor is connected through distributor with power supply.

Known from the patent description PL 186536 position for measurements of torques of electrical drives of dampers has disk braking set, set to the body of the position, controlled with a linear servomotor, coupled with a hydraulic pump and connected through lever set with a sensor of force measurement, connected through an amplifier and A/C converter with a computer.

Known from the patent description PL 208165 position for servomotors maintenance, used by the manufacturer or the user of hydraulic servomotors, in the case of longer warehousing or transport, before installation. Then the position has a frame with symmetrically fixed working servomotor inside, connected by a shape connector with maintained servomotor, mounted separately in sockets and supported adjustable, regulated bracket. Both the connector and each socket has the structure ensuring replaceable fitting of the maintained servomotor as well as transfer of sliding and opening forces of this servomotor on the position.

Known from the patent description PL 209808 device for setting kinetic energy of the servomotor has fitted on the frame retaining boards set, grip of the tested servomotor and laser measurement head, and next to the grip automatic pneumatic supply set. Automatically pushed connections are set on the clamping rods of servomotors, fixed on the support holder, driven by manual screw mechanism containing horizontal guides. Pressure servomotors have flanges placed between the pressure board and the base board. On the base board a vessel with liquid is mounted connected by means of a pneumatic cable with the middle board of the tested servomotor. The set contains a fastening board and retaining board which are connected by means of a screw mechanism, where resisting board is conducted by means of pole guides and is connected by means of removable brackets with the front board. All the plates of support plates set have rectangular holes in the middle.

Known from the patent description CN 201589676 vertical testing position of servomotor torque, and the patent description CN 201307141 the control system, communication and user interface, while from patent descriptions KR 20090127169 and JP 2002365166 a system of loading the servomotor with the use of electrical servodrive is known.

The purpose of the invention was enabling tests of servomotors whose working bodies execute linear or rotary movement under mechanical load in variable climate conditions.

The technical task set to solve was preparation of the structure of the position for servomotors tests whose working bodies execute linear or rotary movement under the influence of external load under variable climate conditions.

Position for testing servomotors whose working bodies execute linear or rotary movement, equipped with a testing chamber, electrical engines, clutches, force measurement sensors, according to the invention is characterized by the fact that it contains a climatic chamber with adjusted temperature and humidity, in which in one end the tested servomotor with rotary movement is placed, connected by means of a shaft and clutch with electrical engine equipped with a brake, and the shaft contains a moment meter and permanently fitted roller. On the other hand, the tested servomotor with linear movement is placed in the other end of the climatic chamber, equipped with a culvert and is connected by means of an articulation with carts, placed on the guide with force converter between. The cart is connected with a movement converter. On the one hand, the cart is connected by an articulation with the cart, which is connected by screw gearbox with the electrical engine. On the other hand, the cart is connected to the rotary roller, which is connected by means of a band carried out on it and changing direction. The band, on the one hand, is carried out by rotary rollers and connected with a weight and, on the other hand, is conducted on the rotary roller and connected with the roller fastened permanently on the shaft.

The advantage of the invention is the possibility of gravitational or electromechanical loading the working bodies of servomotors executeing linear or rotary movement in variable climate conditions. In the presented solution in the course of tests operational characteristics of servomotors are recorded, such as displacement and the load of working body in the function of time.

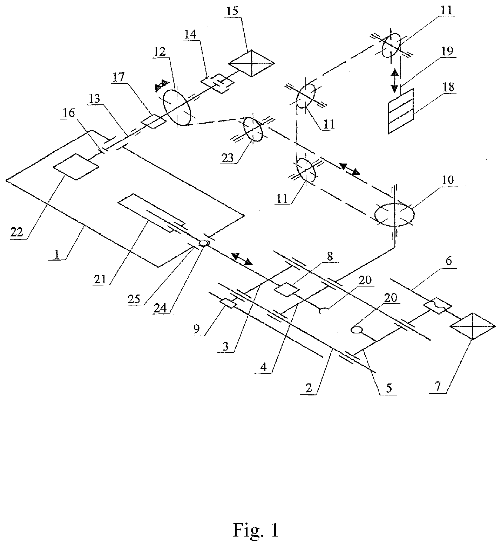

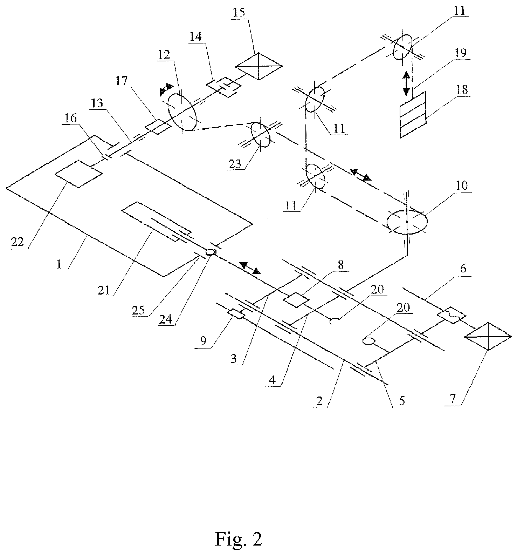

The object of the invention is shown in the example of execution in the figure where diagram of the position for servomotors tests is presented whose working bodies execute linear or rotary movement.

Position for testing servomotors whose working bodies execute linear or rotary movement, in an example execution according to the invention, consists of equipped with culverts 25 climatic chamber 1 with adjusted temperature and humidity inside which the tested servomotor with linear movement is placed 21 or servomotor 22 with rotary movement. In the course of tests of servomotors 21 with linear movement the working body of the servomotor 21 is connected with the cart 3 by means of articulation 24. Movement of the servomotor 21 causes cart's movement 3 and, through dynamometer 8 of the cart 4 with the rotary roller 10 along guides 2. Since one end of the band 19 passing through the roller 23 is connected with a circuit of an immobilized roller 12, the other one through rollers 11 with weights 18, linear movement of carts 3, 4, under the operation of working body of the servomotor 21, causes by means of the band 19 lifting the loads 18 whose weight determines the force loading the servomotor 21, measured with a converter 8. Immobilization of roller 12 takes place through connection with the use of controlled clutch 14, of the shaft 13 equipped with engine with a brake 15. The variable loading force value of the servomotor 21 is achieved by connection by means of an articulation 20 of the cart 5, on the guides 2 with the cart 4. The force exerted by means of a screw gearbox 6 driven by an engine 7 is transferred by the connected carts 4, 5, converter 8 of force and the cart 3 on tested servomotor 21 and is its test load. Movement converter 9 connected with the cart 3 registers in the course of testing the location of working body of the servomotor 21 in the function of time.

In the course of tests of servomotors 22 with rotary movement the executive body of the servomotor 22 is connected with a clutch 16 with the shaft 13 with mounted roller 12. Under the influence of the moment coming from the rotary servomotor 22, after disconnecting the clutch 14 winding the band takes place 19 on the roller 12. As a result of immobilization of the cart 3, connected with the cart 4 with mounted roller 10, through a system of rollers 11, lifting the loads takes place 18 whose weight determines the values of the loading moment calculated on the basis of dynamometer indications 8 or moment meter 17. The variable torque value charging the tested servomotor 22 is obtained using electrical engine 15 with adjustable torque, connected with a clutch 14 with the shaft 13. The angular location of the shaft 13 and the related torque in the function of time is recorded by means of a converter 17 connected with the shaft 13.

## Claims

1. Position for testing servomotors whose working bodies execute linear or rotary movement, equipped with a testing chamber, electrical engines, clutches, force measurement sensors, characteristic by the fact that they contain a climatic chamber /1/with adjusted temperature and humidity, in which in one end the tested servomotor with rotary movement is placed /22/, connected by means of a shaft /13/and clutch /14/with electrical engine /15/equipped with a brake, and the shaft /13/having a moment meter /17/and permanently fitted roller /12/, while the tested servomotor with linear movement /21/, in the other end of the climatic chamber /1/, equipped with a culvert /25/, is connected by means of an articulation /24/with carts /3, 4/, placed on the guide /2/, between which force converter /8/is placed, and the cart /3/is connected with the movement converter /9/and on one side the cart /4/is connected by an articulation /20 /with the cart /5/, which is connected by a screw transmission /6/with electrical engine /7/and, on the other side, the cart /4/is connected with a rotary roller /10/, which is connected by means of a band that runs on it and changes direction /19/that on one side is guided by rotary rollers /11/and connected with a weight /18/ and on the other side it is conducted on a rotary roller /23/and connected with a roller /12/fastened on the shaft /13/.
